Europäisches Patentamt

European Patent Office

Office européen des brevets

(11) Publication number: **0 074 476**
**B1**

## (12) EUROPEAN PATENT SPECIFICATION

(45) Date of publication of patent specification: **09.10.85**

(21) Application number: **82106399.7**

(22) Date of filing: **16.07.82**

(51) Int. Cl.⁴: **G 11 B 15/66**

(54) Web threading apparatus.

(30) Priority: **26.10.81 US 315112**

(43) Date of publication of application:
**23.03.83 Bulletin 83/12**

(45) Publication of the grant of the patent:
**09.10.85 Bulletin 85/41**

(84) Designated Contracting States:
**DE FR GB**

(56) References cited:
**EP-A-0 042 986**
**EP-A-0 060 571**
**DE-A-2 915 301**
**US-A-3 752 416**
**US-A-3 797 776**
**US-A-3 934 840**

(73) Proprietor: **International Business Machines Corporation**
**Old Orchard Road**
**Armonk, N.Y. 10504 (US)**

(72) Inventor: **Rueger, William John**
**733 East Marigold Circle**
**Tucson Arizona (US)**

(74) Representative: **Petersen, Richard Courtenay**
**IBM Svenska AB Patent Operations Box 962**
**S-181 09 Lidingö (SE)**

Courier Press, Leamington Spa, England.

## Description

This invention relates to web threading apparatus for moving the leading end of a flexible web wrapped on a supply reel over a web path from a first position adjacent the supply reel to a second position on a take-up reel for subsequent rotational movement with the take-up reel.

Automatic threading systems have been widely used in the feeding of web material from a supply reel to a take-up reel. The present invention can be applied to any web transport apparatus provided with a flexible web, although described herein in particular with respect to a magnetic tape cartridge threading apparatus.

Techniques have been developed for automatically threading a web material from a supply reel to a take-up reel in order to overcome the problems encountered when a length of tape has to be extracted from the supply reel and threaded through the different stations by an operator. The end of the web must then be attached to the take-up reel by some appropriate means. In a typical prior art automatic threading system, a piece of leader tape is permanently attached to the take-up reel. The leader tape is threaded through the tape drive to a position near the supply reel. The supply reel typically has a connector which can be simply and quickly connected to the trailing edge of the leader tape of the take-up reel. The leader tape and the coupling device then become the substrate for the subsequent wraps of the web on the take-up reel. The leader tape and especially the connector cause a problem in that creases could be formed in the subsequent layers which could ruin the reuse of the tape since the magnetic transitions might occur at the creases. This made the resensing of the magnetic transitions haphazard at best.

Slides were then adapted to push a leader block from the supply reel to the take-up reel. The take-up reel could be adapted to accommodate the leader block and thereby provide a smooth surface for subsequent layers of the magnetic tape, for instance. The slides and levers had the problem in that only very simplistic tape paths could be covered. Further, the distance between the supply reel and the take-up reel had of necessity to be very short because the slides and hooks could not cover any complex tape path.

It is, therefore, an object of the present invention to provide a simple threading apparatus that can cover a complex tape path.

In a copending patent application EP—A—0042986 (filed 03.06.81, published 06.01.82), apparatus is disclosed with a channel formed to coincide approximately with the path of tape through a tape drive apparatus. The remaining section of the channel completes the path for the endless band that is disposed for sliding engagement within the channel. Suitable means are provided to drive the band within the channel in a forward and reverse direction. The channel and the band are located in a plane different from the plane produced by the tape as it moves from its supply reel to the take-up reel. A threading pin is attached to the band in the channel. The pin is removably connected to a leader block which is connected to the free end of the magnetic tape and provides the external access for pulling the magnetic tape from the supply reel of the cartridge. Sliding the band within the channel causes the threading pin and the leader block to be pulled along the tape path as determined by the shape of the channel.

A further application No. 82103558.1 (filed 27.04.82, published 22.09.82 as EP—A—0060571 and claiming priority from US 315120, filed 26.10.81), discloses a threading apparatus for a magnetic tape transport that uses a spring wound on a spool to pull the tape through the complex tape path. A threading pin of the apparatus attaches to a leader block to pull the tape from the supply spool in the cartridge. The threading pin is attached to a rotatable spool that has a constant force spring attached to its hub. The other end of the spring is connected to a cutout in the take-up reel of the tape drive apparatus. The constant force spring operates at a plane different from the plane of the magnetic tape path. A latch holds the spool adjacent to the supply reel. When the cartridge is inserted, the latch releases the spool. The spring on the spool will wind around its hub and pull the threading pin through a tape path such that the leader block is placed into the take-up spool with the leader block forming a part of the hub to permit the smooth surface for the subsequent wraps of the tape around the hub.

According to the invention, web threading apparatus is characterised by a pantograph mechanism, means for rotating a first part of the pantograph mechanism, a device adapted to couple to the leading end of the web at the first position, and attached to a second part of the pantograph mechanism, and cam and cam follower means co-operating with a third part of the pantograph mechanism, whereby rotation of the first part of the pantograph mechanism by the rotating means causes the coupling device to describe said path between the first and second positions determined by the cam and cam follower means.

The scope of the invention is defined by the appended claims; and how it can be carried into effect is hereinafter particularly described with reference to the accompanying drawings, in which:—

Figure 1 is perspective broken view of a reel-to-reel magnetic tape drive having web threading apparatus according to the present invention;

Figure 2 is a top plan view of the tape drive of Figure 1;

Figure 3 is a top plan view of certain parts of Figures 1 and 2;

Figure 4 is a side elevational view of the parts of Figure 3; and

Figures 5 and 6 illustrate the coupling involved in connecting the leader block of the web to the threading pin of the threading apparatus of Figure 1.

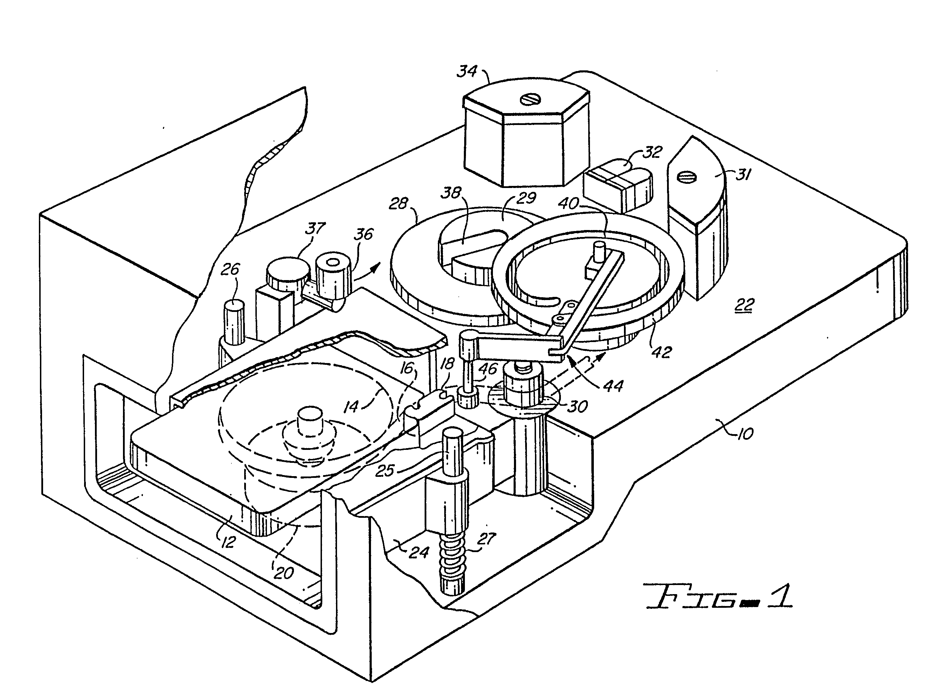

A reel-to-reel type magnetic tape drive apparatus (Figure 1) includes tape threading apparatus according to the present invention and tape transport apparatus similar to that disclosed in EP—0042986. The apparatus includes a base plate 10 on which various components are mounted. A replaceable supply cartridge 12 includes a reel 14 of magnetic tape 16 whose leading edge is attached to the side of a leader block 18 disposed externally of the cartridge. The cartridge 12 can be inserted into the apparatus onto a spring-loaded loader platform 24. A drive motor 20 for the supply reel 14 is mounted beneath the loader platform 24 on the base plate 10 so that its shaft extends normal to the surface and slightly below the surface of the platform in its raised position. The motor shaft is provided with a suitable clutching arrangement which permits the motor to be coupled to the hub of the supply reel 14 by movement of the cartridge 12 on the loader platform 24 in a direction normal to the surface. This vertical movement is achieved by cartridge loading mechanism, of which the loader platform 24 is part and is movable downwardly on shafts 25 and 26 against springs 27.

A take-up reel 28 is permanently attached to the shaft motor (not shown) which is mounted on the base plate 10. When the cartridge and loader platform are lowered to couple the supply reel 14 to its motor 20, the reel 14 lies in substantially the same plane as a hub 29 of the take-up reel 28 so that when tape 16 is transported above surface 22, a point on the tape 16 moves in a plane normal to both motor shafts. The tape is threaded between the supply reel 14 and the take-up reel 28 past a roller guide 30, an air bearing guide 31, a magnetic transducer header 32, a second air bearing guide 34, and a roller 36 of a tension transducer 37. Thereafter, transport of the tape for reeling, unreeling and transducing is achieved by control of the respective driving motors of the reels 14 and 18. The bearing guides 31 and 34 are positioned in relation to the tape path so that the magnetic pigment side of the magnetic tape 16 slides over their air bearing surfaces with the magnetic tape 16 coacting with the magnetic head 32 to read and write magnetic transitions to and from the magnetic tape 16.

The specific details of these components form no part of the present invention, and they have not been illustrated or described in detail. The details of the shape of the leader block 18, the construction of the hub 29 of the take-up reel 28, and the relationship of these elements to each other, is disclosed in EP—0042986. The hub 29 of the take-up reel 28 has a radially extending recess 38 to receive the leader block 18 which is permanently attached to the end of the tape 16 on the supply reel 14. The relationship is such that when the leader block 18 is inserted into the recess 38 by movement of the leader block in a radial direction, the tape 16 attached thereto is positioned to be wrapped on the hub 29 by merely rotating the take-up reel 28, because the length of the slot 38 corresponds generally to the length of the leader block 18. During the winding process, the leader block 18 is maintained in the recess 38 of the take-up reel 28. The automatic threading apparatus disclosed in application No. EP—0042986 generally provides two functional aspects. The first involves moving and guiding a coupling device from the supply reel to the take-up reel, and the second involves selectively coupling the leader block at the supply reel in a manner to permit the leader block to be rotated with the take-up reel without being uncoupled from the threading apparatus.

The automatic threading apparatus of the present invention performs the same two general functions. A threading pin 46 may be coupled to the leader block 18. The pin 46 is on part of a pantograph mechanism 44 by whose rotation the moving and guiding function is implemented. The pantograph mechanism 44 has a cam follower 64 which follows a cam groove 40 in a cam plate 42 to define the path which the leader block 18 will follow. The threading pin 46 is coupled to the leader block 18, travels along the leader block path to the take-up reel 28 and locates the block in the recess 38.

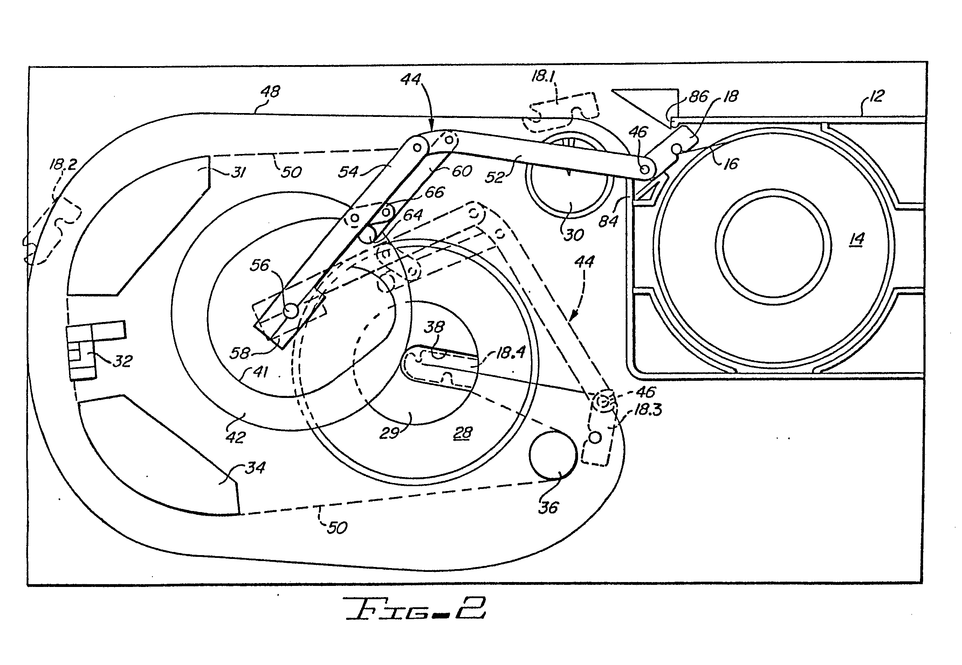

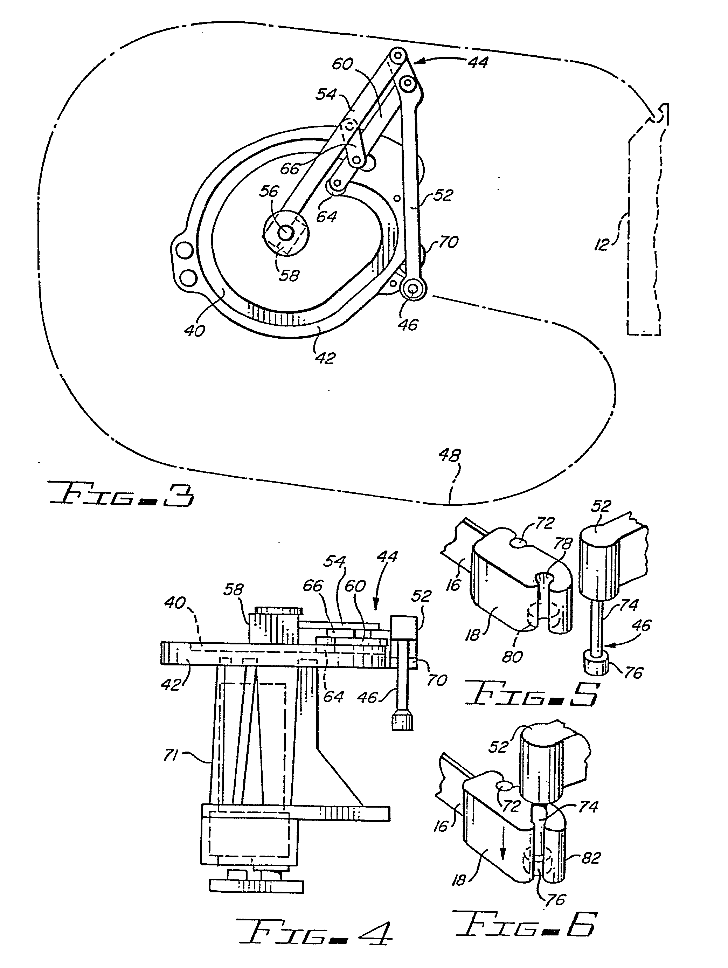

The pantograph mechanism 44 (Figure 2) includes a drive arm 54 rotatable by a shaft 56 of a motor 71 (Figure 4), to which it is secured adjustably by a connector block 58. To the free end of the arm 54 (Figure 2) is pivoted one end of a coupling arm 52 to whose other end is secured the coupling pin 46. Close to the pivotal connection of the arms 54 and 52, one end of a follower arm 60 is pivoted to the arm 52. At its other end, the arm 60 carries the cam follower 64. Between the ends of the arms 54 and 60, a link 66 pivotally connects those arms. The linkage mechanism 44 is such that the path 48 of the pin 46 is a reproduction to an enlarged scale of the path 41 of the cam groove 40.

The pantograph mechanism 44 starts in the position shown in solid lines in Figure 2 with the coupling pin 46 in contact with the leader block 18. In this position the mechanism 44 is ready to pull the leader block 18 out of the cartridge 12 to unreel the magnetic tape 16 from the supply reel 14.

Rotation of the shaft 56 and arm 54 begins and the pin 46 is drawn by the arm 52 away from the cartridge 12, carrying the leader block 18 with it. The path of the pin 46 is determined by the path of the cam follower 64 as controlled by the cam groove 40. At first it is around the guide 30, being such as to enable the leader block 18 to clear the guide, as shown in position 18.1. Then the path is such that the leader block 18 is moved around clear of the guide 31, as shown in position 18.2. As will be appreciated, the tape 16 attached to the leader block 18 follows the leader block 18 as it is moved along its path 48. However, as the path 48 curves, for example, around the guide 30 and the block 18 moves out of a rectilinear path, the tape under tension moves to engage the guide 30 and any subsequent guides within concave curved portions of the path, taking the shortest distance between two points of contact.

The path 48 continues around and clear of the head 32, the guide 34 and the roller 36, and the leader block 18 is moved around these to a position 18.3 in which the pin 46 is aligned with radial recess 38 in the hub 29 of the take-up reel 28. The pantograph mechanism 44 is shown in dashed lines in this position, preparatory to drawing the leader block 18 into the position 18.4 in the recess 38 in the hub 29 of the take-up reel 28. The magnetic tape 16 takes the path shown in the dashed lines identified by the reference numeral 50.

The cam plate 42 with the preferred outline of the cam groove 40 is shown in Figure 3, with the preferred linkage embodiment of the pantograph mechanism 44 in its final position with the leader block in position 18.4 (Figure 2). A pin on the arm 52 may engage in an aligner block 70 on the plate 42 to ensure precise positioning of the pin 46 over the centre of rotation of the take-up reel 28. The follower 64 is at the end of the cam groove 40.

The coupling action of the leader block 18 to the threading pin 46 is shown in Figures 5 and 6. The leader block 18 has a re-entrant recess into which the leading edge of magnetic tape 16 is secured by a cylinder 72 of a soft plastics material. The threading pin 46 has an upper section 74 of smaller diameter than that of a lower section 76. The block 18 has a radial cutout section 58 forming a recess into which the smaller diameter section 74 easily passes into the cutout section 78 in the leader block 18. The block 18 also has a larger diameter cutout section 80 for mating with the larger lower section 76 of the threading pin 46 as shown in Figure 6.

As the cartridge 12 is inserted into the loading position, the cutout section 78 of the block 18 passes over the upper section 74 of the threading pin 46. The cartridge is then placed into the operating position by moving the cartridge in a downward movement as shown by the arrow in Figure 6. The leader block 18 also moves in a downward direction axial to the threading pin 46 thereby causing the larger cutout section 80 to capture the larger lower section 76 of the threading pin 46. The leader block 18 is thereby firmly captured by the threading pin 46 and will follow the motion of the pin as it sweeps around the operational path of the tape drive. The leader block 18 includes a boss protruding from the tip of the leader block 18. The boss 82 coacts with a portion 84 of the cartridge 12 (Figure 2). The boss 82 and the portion 84 of the cartridge together with the opposite end of the leader block 18 and a portion 86 of the cartridge 12 provide a closure to the interior of the cartridge 12. The boss 82 prevents the leader block 18 from falling out of the entrance to the cartridge 12.

In operation, the cartridge 12 is loaded into the tape drive unit with the pantograph mechanism 44 in the position shown in Figure 2. As the cartridge 12 is inserted, the cutout section 78 of the leader block 18 interconnects with the upper section 74 of the threading pin 46. When the cartridge 12 is moved into the operating position against springs 27, the larger cutout section 80 of the leader block 18 passes over the larger lower section 76 of the threading pin 46 to provide a positive interconnection (Figure 6). The motor 71, (Figure 4) rotates the shaft 56 thereby causing the pantograph mechanism 44 to move the pin 46 to pull the leader block 18 out of the opening to the cartridge 12. The shaft 56 continues to rotate causing the leader block 18 to follow the path identified 48 and the magnetic tape 16 to follow eventually reaching the tape path 50. The magnetic tape 16 is thus directed around roller guide 30, air bearing guide 31, magnetic transducer 32, air bearing guide 34, and roller 36 of the tension transducer 37. The movement of the arm 52 and pin 46 is determined by the cam groove 40, in which the follower 64 is engaged. As the follower 64 reaches the end of the cam groove 40, the linkage positions the threading pin 46 at the centre of rotation of the take-up reel 28. With the pin on the arm 52 within the aligner block 70, the leader block 18 is snugly placed within the recess 38 in the hub 29. The motor connected to the take-up reel 28 is activated to wind the magnetic tape 16 around the hub 29.

After the utilization of information from the magnetic tape 16, a re-reeling operation is performed to return the magnetic tape 16 and the leader block 18 into its cartridge 12.

In rereeling, either reverse rotation of the drive motor 20 or both reverse rotation of the motor 20 and reverse rotation of the shaft 56 by the motor 71 causes the pantograph mechanism 44 to travel in the reverse direction to lead the block 18 and pin 46 back to the cartridge 12. The magnetic tape 16 pulls the leader block 18 from the recess 38 of the hub 29 and the pin 46 is either pulled along or driven by the shaft 56 to reverse the direction along the paths. At the end of the reverse rotation, the leader block 18 is snugly placed within the cartridge 12. The shaft 56 provides the last motion to the pantograph mechanism 44, and the threading pin 46 to drive the boss 82 of the leader block 18 into a locking arrangement with portion 84 of the cartridge 12. The cartridge 12 is unloaded by an upward motion which retreats the cutout section 80 of the leader block 18 from contact with the larger lower section 76 of the threading pin 46 and the cartridge is free to be removed for replacement by a subsequent cartridge.

It will be appreciated that many modifications of the structure, arrangement proportions, elements, materials and components may be used without departing from the scope of the invention. For instance, many different types of latching arrangements may be substituted for the interconnection of the pantograph mechanism 44 to the magnetic tape 16 of the preferred embodiment. Further, many different cartridge shapes as well as the interconnection of the leader block 18 to the take-up reel 28 can be substituted without departing from the present invention. It should be evident that the tape path 50 taken by the magnetic tape 16 is for purposes of the disclosure of the preferred embodiment, and it should be evident that the transducer 32 and the coated side of the magnetic tape 16 could be placed on the outside of the tape path 50 without departing from the present invention. Further, the preferred mechanism shown for the pantograph mechanism 44 is illustrative of the preferred embodiment and other linkages could be determined by those skilled in the art again without departing from the present invention.

Whilst, in the preferred embodiment, the pivot points of the arms 52, 54 and 60 and the link 66 are at the corners of a parallelogram, it will be appreciated that different and more complex linkages may be adopted for the pantograph mechanism to achieve desired threading paths.

The link 66 from the arm 60 to the arm 54 could be replaced by a pin and slot connection between the arms 54 and 60.

To increase the complexity of the tape path, the cam groove 40 may cover more than the approximately 360° radius that is shown in the figures. The cam plate 42 could be mounted for rotation by a motor such as motor 71 for instance, such that the rotation of the cam groove 40 is timed with respect to the rotation of shaft 56. The rotation of the cam plate 42 would permit a more complex path to be covered by the end of the tape 16, because the cam groove 40 determines the extension of the pantograph mechanism 44 through cam follower 64. Further the rotation of the cam groove 40 may be in the same or opposite direction to the rotation of the shaft 56.

The motor 71 could be replaced by a constant force wind-up spring, similar to that disclosed in European patent application No. 82103558.1 (EP—A—0060571), tending to rotate the shaft 56 to the final position, if there were a latch in the initial position. Provided there are no re-entrants in the cam groove, one end of the spring could be attached to the cam follower 64.

The cam plate, with the cam groove reversed, would be carried on the arm 60 of the pantograph mechanism and the follower 64 be fixed.

**Claims**

1. Web threading apparatus for moving a leading end of a flexible web (16) wrapped on a supply reel (14), over a web path from a first position adjacent the supply reel to a second position on a take-up reel (28) for subsequent rotational movement with the take-up reel, characterised by a pantograph mechanism (44), means (71) for rotating a first part (54) of the pantograph mechanism, a device (46) adapted to couple to the leading end of the web at the first position, and attached to a second part (52) of the pantograph mechanism, and cam and cam follower means (40, 64) co-operating with a third part (60) of the pantograph mechanism (44), whereby rotation of the first part (54) of the pantograph mechanism by the rotating means (71) causes the coupling device (46) to describe said path (48) between the first and second positions determined by the cam and cam follower means (40, 64).

2. Apparatus according to claim 1, in which the first part (54) of the linkage mechanism (44) is secured directly to the rotating means (71).

3. Apparatus according to claim 2, in which the first part is an arm (54) mounted on the shaft (56) of a motor (71).

4. Apparatus according to claim 1, 2 or 3, in which the coupling device (46) is adapted to be selectively coupled to a leader block (18) attached to the leading end of the web (16) wrapped on the supply reel (14) of a replaceable cartridge (12).

5. Apparatus according to any preceding claim, in which the third part (60) of the linkage mechanism (44) carries a cam follower (64) engaged in a cam groove (40).

6. Apparatus according to claim 5, in which the cam groove (40) is adapted for rotation.

7. Apparatus according to any preceding claim, in which the pantograph mechanism (44) comprises a rotatable arm (54) as the first part, a coupler guide arm (52) as the second part pivotally connected to the rotatable arm (54), a follower arm (60) as the third part pivotally connected to the coupler guide arm (52), and a link (66) pivotally connecting the rotatable arm (54) and follower arm (60).

8. Apparatus according to claim 7, in which the pivotal connections of the arms (52, 54, 60) and link (66) lie at the corners of a parallelogram.

**Patentansprüche**

1. Eine Bandeinfädelvorrichtung, die das Führungsende eines um eine Vorratsrolle (15) gewickelten, flexiblen Bandes aus einer ersten Stellung in der Nähe der Vorratsrolle über einen Bandweg zu einer zweiten Stellung an einer Aufnahmerolle (28) zwecks anschließender Drehbewegung mit der Aufnahmerolle führt, gekennzeichnet durch einen Pantographenmechanismus (44), eine Vorrichtung (71), die ein erstes Element (54) des Pantographenmechanismus in Drehbewegung versetzt, eines Einrichtung (46), die das Führungsende des Bandes in der ersten Stellung aufnimmt und mit dem zweiten Element (52) des Pantographenmechanismus verbunden ist, ein Nocken und eine Nockenmitenehmervorrichtung (40, 64), die mit dem dritten Element (60) des Pantographenmechanismus (44) zusammenwirken, wobei die durch die Drehvorrichtung (71) hervorgerufene Drehbewegung des ersten Elements (54) des Pantographenmechanismus bewirkt, daß die aufnehmende Vorrichtung (46) den genannten Weg (48) zwischen der vom Nocken und der Nockenmitnehmervorrichtung (40, 64) bestimmten ersten und zweiten Stellung beschreibt.

2. Eine Vorrichtung gemäß Anspruch 1, wobei das erste Element (54) des Pantographenmechanismus (44) direkt mit der Drehvorrichtung (71) verbunden ist.

3. Eine Vorrichtung gemäß Anspruch 2, wobei das erste Element ein auf der Welle (56) eines Motors (71) montierter Arm (54) ist.

4. Eine Vorrichtung gemäß den Ansprüchen 1, 2 oder 3, wobei die aufnehmende Vorrichtung (46) wahlweise an einen Führungsblock (18) angeschlossen werden kann, der mit dem Führungsende des auf der Vorratsrolle (14) einer austauschbaren Kassette (12) aufgewickelten Bandes (16) verbunden ist.

5. Eine Vorrichtung gemäß irgendeinem der vorstehenden Ansprüche, wobei das dritte Element des Pantographenmechanismus (44) einen in eine Nockennut (40) eingreifenden Nockenmitnehmer (64) aufweist.

6. Eine Vorrichtung gemäß Anspruch 5, wobei die Nockennut (40) passend zur Drehbewegung ausgeführt ist.

7. Eine Vorrichtung gemäß irgendeinem der vorstehenden Ansprüche, wobei der Pantographenmechanismus (44) einen Dreharm (54) als erstes Element, einen Aufnahmeführungsarm (52) als zweites, drehbar mit dem Dreharm (54) verbundenes Element, einen Mitnahmearm (60) als drittes, drehbar mit dem Aufnahmeführungsarm (52) verbundenes Element, und ein Verbindungsstück (66) umfaßt, das den Dreharm (54) drehbar mit dem Mitnehmerarm (60) verbindet.

8. Eine Vorrichtung gemäß Anspruch 7, wobei die drehbaren Verbindungen der Arme (52, 54, 60) und des Verbindungsstücks (66) die Ecken eines Parallelogramms bilden.

**Revendications**

1. Dispositif d'enfilement de bande, pour déplacer une amorce d'une bande souple (16), enroulée sur une bobine d'alimentation (14), sur une trajectoire allant d'une première position adjacente à la bobine d'alimentation à une deuxième position sur une bobine réceptrice (28), en vue d'un mouvement de rotation subséquent avec la bobine réceptrice, caractérisé par un mécanisme de pantographe (44), par des moyens (71) pour faire tourner une première partie (54) du mécanisme de pantographe, par un dispositif (46) adapté pour coupler l'amorce de la bande à la première position et attaché à une deuxième partie (52) du mécanisme de pantographe, et par des moyens de came et des moyens suiveurs de came (40, 64) coopérant avec une troisième partie (60) du mécanisme de pantographe (44), de sorte que la rotation de la première partie (54) du mécanisme de pantographe provoquée par les moyens pour faire tourner (71) amène le dispositif d'accouplement (46) à décrire la trajectoire (48) entre la première et la deuxième position, trajectoire qui est déterminée par les moyens de came et les moyens suiveurs de came (40, 64).

2. Dispositif selon la revendication 1, dans lequel la première partie (54) du mécanisme articulé (44) est directement liée aux moyens d'entraînement en rotation (71).

3. Dispositif selon la revendication 2, dans lequel la première partie est un bras (54) monté sur l'arbre (56) d'un moteur (71).

4. Dispositif selon la revendication 1, 2 ou 3, dans lequel le dispositif d'accouplement (46) est adapté pour être sélectivement accouplé à un bloc d'amorce (18) attaché à l'amorce de la bande (16) enroulée sur la bobine d'alimentation (14) appartenant à une cartouche remplaçable (12).

5. Dispositif selon l'une quelconque des revendications précédentes, dans lequel la troisième partie (60) du mécanisme articulé (44) porte un suiveur de came (64) engagé dans une rainure de came (40).

6. Dispositif selon la revendication 5, dans lequel la rainure de came (40) est adaptée pour tourner.

7. Dispositif selon l'une quelconque des revendications précédentes, dans lequel le mécanisme de pantographe (44) comporte un bras tournant (54), en tant que première partie, un bras-guide coupleur (52), en tant que deuxième partie, relié au bras tournant (54) avec possibilité de pivotement sur celui-ci, un bras suiveur (60), en tant que troisième partie, relié au bras-guide coupleur (52) avec possibilité de pivotement sur celui-ci, et une biellette de liaison (66) reliant, avec possibilité de pivotement, le bras tournant (54) et le bras suiveur (60).

8. Dispositif selon la revendication 7, dans lequel les liaisons à pivotement des bras (52, 54, 60) et la biellette de liaison (66) se trouvent aux sommets d'un parallélogramme.

FIG-1

Fig-2

2

FIG-3

FIG-4

FIG-5

FIG-6